# EUROPEAN PATENT SPECIFICATION

(11) **EP 2 591 884 B1**
(45) Date of publication and mention of the grant of the patent: **09.09.2015**
(21) Application number: 11803557.5
(22) Date of filing: 04.07.2011
(51) Int. Cl.: B25D 17/18, B23Q 11/00

(54) **DUST COLLECTION DEVICE AND IMPACT TOOL**
STAUBSAMMELVORRICHTUNG UND SCHLAGWERKZEUG
DÉPOUSSIÉREUR ET PERCUTEUR

(30) Priority: 08.07.2010 JP 2010156042
(43) Date of publication of application: 15.05.2013
(73) Proprietor: Makita Corporation, Anjo-shi, Aichi 446-8502 (JP)
(72) Inventor: IKUTA Hiroki, Anjo-shi Aichi 446-8502 (JP); YAMAUCHI Ken, Anjo-shi Aichi 446-8502 (JP); HANAI Takamasa, Anjo-shi Aichi 446-8502 (JP); MIWA Masao, Anjo-shi Aichi 446-8502 (JP); UKAI Tomohiro, Anjo-shi Aichi 446-8502 (JP); WAKATSUKI Shusaku, Anjo-shi Aichi 446-8502 (JP); ITO Akihiro, Anjo-shi Aichi 446-8502 (JP)
(74) Representative: Kramer Barske Schmidtchen Patentanwälte PartG mbB
(86) International application number: PCT/JP2011/065308
(87) International publication number: WO 2012/005223

(56) References cited:
- DE-A1- 3 018 197
- DE-A1- 19 860 182
- GB-A- 2 096 030
- JP-A- 2007 301 717
- JP-A- 2007 301 717
- JP-U- 54 144 485
- JP-U- H03 124 805
- US-A- 2 994 235
- US-A- 4 097 176
- US-A- 4 097 176
- US-A- 4 207 953

## Description

### FIELD OF THE INVENTION

The invention relates to a dust collecting device for collecting dust generated by an impact tool, and an impact tool having the dust collecting device.

### BACKGROUND OF THE INVENTION

US 4,097,176 A discloses a particle-aspirating accessory for a hammer drill.

In an impact tool which performs a hammering operation or a hammer drill operation by a tool bit on a workpiece such as concrete, dust is generated during operation. Therefore, some conventional impact tools are provided with a dust collecting device for collecting dust generated during operation. For example, Japanese non-examined laid-open Patent Publication No. 2007-303271 discloses a dust collecting device having a cylindrical hood which is arranged to surround a tool bit. In this dust collecting device, dust generated by operation is sucked up through a front end opening of the hood and collected via a pipe and a dust transfer passage formed within the impact tool body.

The above-described known dust collecting device is configured such that a base of the cylindrical hood is held on a front end region of the tool body and extends toward the bit tip from the hood holding part. Therefore, the distance from the hood holding part to a front end of the hood is increased, so that the stability of the dust collecting device attached to the impact tool is reduced.

DE 19860182 A discloses a dust collecting device according to the preamble of appended claim 1.

### DISCLOSURE OF THE INVENTION

### PROBLEMS TO BE SOLVED BY THE INVENTION

It is, accordingly, an object to improve the mounting condition of a dust collecting device on an impact tool, in the dust collecting device which is attached to the impact tool and collects dust generated by the impact tool.

### MEANS FOR SOLVING THE PROBLEM

In order to solve the above-described problem, a dust collecting device according to claim 1 can be provided.

In a preferred embodiment, a dust collecting device is provided which is attached to an impact tool and collects dust generated by the impact tool. In the impact tool, a tool bit coupled to a front end region of a tool body is caused to rectilinearly move in an axial direction of the tool bit. The dust collecting device has a dust collecting part having a dust suction port at its front end, and a dust transfer part which is connected to the dust collecting part in order to transfer dust downstream from the dust suction port. The dust collecting part is held on a shank of the tool bit, and the dust transfer part is held on the tool body.

Accordingly, the dust collecting device is held at two points on the tool body and the tool bit located forward of the tool body. Therefore, the mounting condition of the dust collecting device on the impact tool is improved. Further, the dust collecting part can be placed closer to a dust generation area, so that the dust collecting efficiency can also be improved.

According to a further embodiment, the dust collecting part has a sliding part which is engaged at least in part with the shank of the tool bit and can move in the axial direction with respect to the shank.

Accordingly, the dust collecting part is movably guided with respect to the shank of the tool bit via the sliding part, so that the stability of the dust collecting part attached to the impact tool can be achieved without interfering with rectilinear movement of the tool bit during operation.

According to a further embodiment, the dust collecting part has a dust suction port part formed with the dust suction port, and the dust suction port part and the sliding part can be attached to and detached from each other.

Accordingly, with the construction in which the dust collecting part has the dust suction port part and the sliding part which can be attached to and detached from each other, the function of the dust collecting part can be recovered by replacing one of the dust suction port part and the sliding part. Further, this can increase the life of the dust collecting part.

According to a further embodiment, the dust suction port part has a through hole through which the tool bit extends, and the sliding part is detachably engaged in the through hole.

Accordingly, with the construction in which the sliding part is detachably engaged in the through hole, the sliding part can be engaged in a simple structure.

According to a further embodiment, the dust collecting part has a dust passage via which the dust suction port communicates with the dust transfer part, and the dust passage surrounds the tool bit entirely around its axis. The manner in which "the dust passage surrounds the tool bit entirely around its axis" typically refers to the manner in which the dust collecting part is formed by a generally cup-like member having a dust suction port at its front end and the shank of the tool bit movably extends through a bottom of the cup-like member. Specifically, the inside of the cup-like member functions as a dust passage, so that the dust passage surrounds the tool bit entirely around its axis.

Accordingly, with the construction in which the dust passage surrounds the tool bit entirely around its axis, the dust trapping efficiency can be increased.

According to a further embodiment, the dust collecting part has a dust passage via which the dust suction port communicates with the dust transfer part, and the dust passage surrounds the tool bit partially around its axis. The manner in which "the dust passage surrounds the tool bit partially around its axis" typically refers to the manner in which the dust collecting part incudes a cylindrical part through which the shank of the tool bit movably extends, and a cylindrical hood having a dust suction port at its front end and extending adjacent to and parallel to the cylindrical part. Specifically, the inside of the cylindrical hood functions as a dust passage, so that the dust passage surrounds the tool bit partially around its axis.

Accordingly, with the construction in which the dust passage surrounds the tool bit partially around its axis, the dust passage can be reduced to the minimum necessary, so that size reduction can be realized. Further, visibility of the work area can be improved.

According to a further embodiment, the dust collecting part can be adjusted in position in the axial direction of the tool bit. The manner in which the dust collecting part "can be adjusted in position in the axial direction" refers to the manner in which the dust collecting part can be moved in the axial direction and fixed in that position.

Accordingly, the position of the dust suction port can be adjusted according to the length of the tool bit which is selectively coupled to the tool body. Therefore, the dust suction port can be adequately positioned with respect to the tip of the tool bit to be used, and dust generated by operation can be efficiently collected. Further, it is not necessary to prepare a plurality of dust collecting devices so as to accommodate tool bits of different lengths.

According to a further embodiment, the dust collecting part has a through hole extending therethrough in the axial direction of the tool bit and a plurality of cylindrical members. The cylindrical members have bores of different diameters corresponding to different outer diameters of a plurality of tool bits and are detachably fitted in the through hole. One of the cylindrical members which has the bore of a diameter corresponding to an outer diameter of the shank of the tool bit to be coupled to the tool body is mounted in the through hole.

Accordingly, when one of the tool bits is selected and coupled to the tool body to perform an operation, the dust collecting part can be held on the tool bit by using the cylindrical member having the bore of a diameter corresponding to the outer diameter of the shank of the selected tool bit. Specifically, the tool bits having the shanks of different diameters can be easily accommodated by replacing the cylindrical members in the dust collecting part.

According to a further embodiment, an impact tool having the dust collecting device as defined in any one of claims 1 to 6 is provided. By this provision, the mounting condition of the dust collecting device on the impact tool is improved. Further, the impact tool can be provided with the dust collecting device which allows the dust collecting part to be placed closer to a dust generation area so that the dust collecting efficiency is improved.

### EFFECT OF THE INVENTION

Accordingly, in a dust collecting device which is attached to an impact tool and collects dust generated by the impact tool, the mounting condition of the dust collecting device on the impact tool can be improved.

Other objects, features and advantages will be readily understood after reading the following detailed description together with the accompanying drawings and the claims.

### BRIEF DESCRIPTION OF THE DRAWINGS

FIG. 1 is an external view showing an entire electric hammer with a dust collecting device according to a first embodiment.
FIG. 2 is a sectional view showing the entire structure of the dust collecting device.
FIG. 3 is a front view showing a dust collecting hood.
FIG. 4 is a perspective view showing the dust collecting hood and its supporting structure.
FIG. 5 is a partially sectional view showing the entire structure of a side handle.
FIG. 6 is a view in the direction of arrow A in FIG. 5.
FIG. 7 is a partially sectional view showing a structure of mounting the dust collecting device to the side handle.
FIG. 8 is a view in the direction of arrow B in FIG. 7.
FIG. 9 is a perspective view showing a dust collecting hood and its supporting structure according to a second embodiment.

### REPRESENTATIVE EMBODIMENT OF THE INVENTION

Each of the additional features and method steps disclosed above and below may be utilized separately or in conjunction with other features and method steps to manufacture and use improved dust collecting devices and impact tools and methods for using them and devices utilized therein. Representative examples of the present invention, which examples utilized many of these additional features and method steps in conjunction, is now described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

### (First Embodiment)

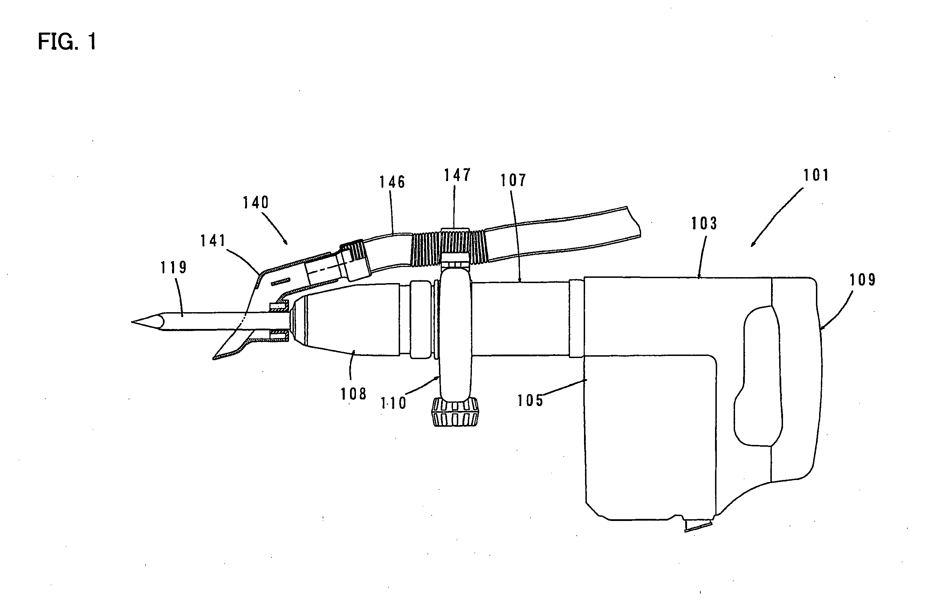

A dust collecting device according to a first embodiment is now described with reference to FIGS. 1 to 8. This embodiment is explained as being applied to an electric hammer as a representative example of an impact tool. FIG. 1 shows an electric hammer 101 having an auxiliary handle in the form of a side handle 110 mounted thereon and a dust collecting device 140 attached to the side handle 110. The construction of the electric hammer 101 is now briefly explained with reference to FIG.1. The hammer 101 mainly includes a body 103 that forms an outer shell of the hammer 101, an elongate hammer bit 119 detachably coupled to the front end region (on the left side as viewed in FIG. 1) of the body 103 via a tool holder (not shown), and a main handle in the form of a handgrip 109 connected to the body 103 on the side opposite to the hammer bit 119 and designed to be held by a user. The body 103 and the hammer bit 119 are features that correspond to the "tool body" and the "tool bit", respectively. The hammer bit 119 is held by the tool holder via a chuck 108 such that it is allowed to reciprocate with respect to the tool holder in its axial direction and prevented from rotating with respect to the tool holder in its circumferential direction. For the sake of convenience of explanation, in the hammer 101, the side of the hammer bit 119 is taken as the front and the side of the main handle 109 as the rear.

The body 103 mainly includes a housing 105 and a generally cylindrical barrel 107 connected to the front of the housing 105. The body 103 houses a driving motor, a motion converting mechanism in the form of a crank mechanism which converts rotation of the driving motor into linear motion, and a striking mechanism which is driven by the crank mechanism and includes a striker (striking element) for striking the hammer bit 119 in the axial direction and an impact bolt (intermediate element) for transmitting the striking movement of the striker to the hammer bit 119.

In the hammer 101 constructed as described above, when the driving motor is driven, a striking force is applied to the hammer bit 119 in the axial direction from the crank mechanism via the striking mechanism. Thus, the hammer bit 119 performs an operation (chipping operation) on a workpiece (concrete) by a hammering movement in the axial direction.

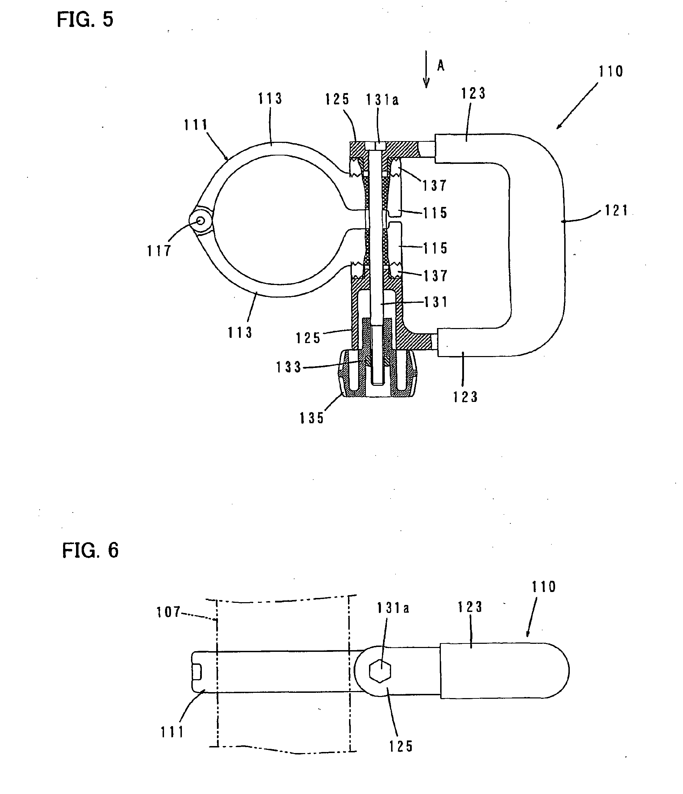

The auxiliary handle in the form of the side handle 110 to which the dust collecting device 140 is attached is now explained with reference to FIGS. 5 and 6. The side handle 110 is detachably mounted onto the barrel 107 of the hammer 101. The side handle 110 mainly includes a mounting ring 111 which is mounted onto the generally cylindrical barrel 107 by holding the outer circumferential surface of the barrel 107 from the outside, a grip 121 connected to the mounting ring 111 and designed to be held by a user, and a clamping means which includes a through bolt 131 and a fastening knob 135 with a nut 133 and serves to clamp and loosen the mounting ring 111.

The mounting ring 111 includes a pair of upper and lower generally semicircular arc ring components 113. The pair ring components 113 are rotatably connected at one end with respect to each other via a shaft 117 which extends parallel to the longitudinal direction of the barrel 107. An outwardly protruding base 115 is formed on the other free end of each of the ring components 113.

The grip 121 has a rod-like shape having a generally circular section and has upper and lower arms 123 which extend parallel to each other from the both ends of the grip 121 in the longitudinal direction (the vertical direction as viewed in FIG. 5) toward the mounting ring 111. The bases 115 of the mounting ring 111 are disposed between extending end portions 125 of the upper and lower arms 123 via ring-like cams 137. The through bolt 131 is loosely inserted in the vertical direction through holes formed in the extending end portions 125, the cams 137 and the bases 115. The through bolt 131 has a hexagonal head 131a on one end, and the head 131a engages with an upper surface (bottom of a counterbore) of the extending end portion 125 of the upper arm 123. The other end of the through bolt 131 protrudes a predetermined distance from the extending end portion 125 of the lower arm 123. The nut 133 of the fastening knob 135 is threadingly engaged with a threaded portion of the through bolt 131.

In the side handle 110 constructed as described above, when the mounting ring 111 is loosely fitted onto the barrel 107 and the fastening knob 135 is turned in one direction (tightening direction), the upper and lower extending end portions 125 are clamped (pressed) and moved (deformed), due to elasticity of the arms 123, in a direction that lessens a distance therebetween (toward each other) by using the through bolt 131 and the fastening knob 135 (the nut 133). As a result, the bases 115 are also moved toward each other via the upper and lower cams 137 in a direction that lessens the ring diameter of the ring components 113. Thus, the mounting ring 111 is clamped onto the barrel 107.

When the fastening knob 135 is turned in the other direction (loosening direction), the upper and lower extending end portions 125 and the bases 115 clamped by the through bolt 131 and the fastening knob 135 are released and return to their initial position in which they are not yet clamped, so that the mounting ring 111 is unclamped from the barrel 107. In this state, the side handle 110 can be removed from the barrel 107.

The dust collecting device 140 is now explained with reference to FIGS. 1 to 4. The dust collecting device 140 is attached to the side handle 110 and serves to suck up and collect dust generated during operation on a workpiece. The dust collecting device 140 according to this embodiment mainly includes a dust collecting hood 141 for collecting dust, a dust collecting hose 146 for transferring dust downstream from the dust collecting hood 141, and a hose holder 147 for holding the dust collecting hose 146. The dust collecting hose 146 is a feature that corresponds to the "dust transfer part".

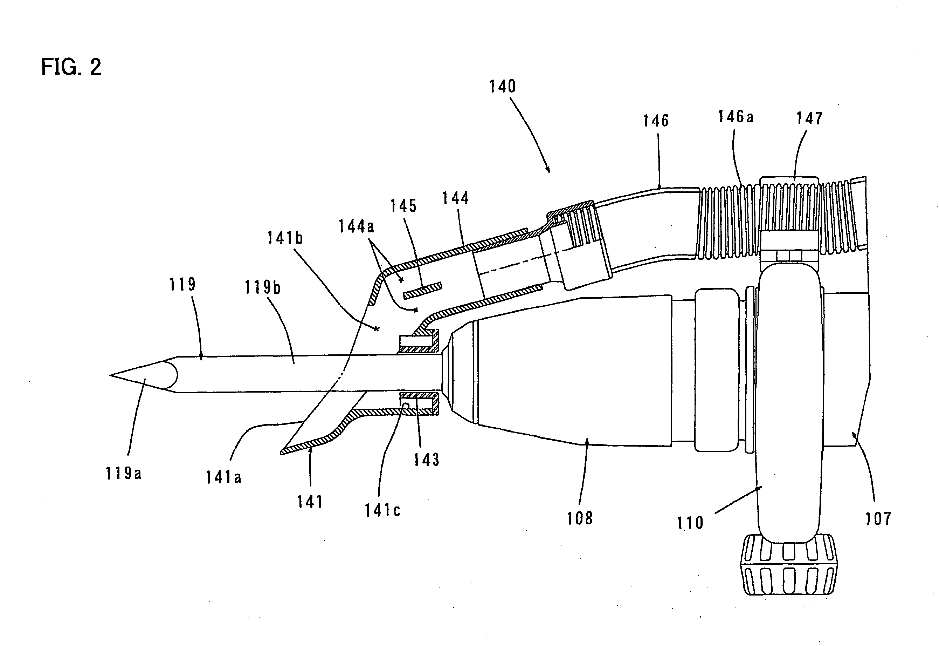

As shown in FIGS. 2 to 4, the dust collecting hood 141 is a generally cup-like member (generally cylindrical member with a bottom) which is arranged to surround the hammer bit 119 entirely around its axis with a predetermined clearance in the radial direction and has an internal space 141b with an open front end formed as a dust suction port 141a. On its bottom (on the side opposite from the dust suction port 141a), the dust collecting hood 141 has a through hole 141 c extending in the axial direction of the hammer bit and formed for mounting a cylindrical sliding member 143 therein, and a hose connecting part 144 formed adjacent to the through hole 141c. The dust collecting hood 141 and the internal space 141b are features that correspond to the "suction port part" and the "dust passage", respectively.

The cylindrical sliding member 143 is a guiding member for the dust collecting hood 141 and has a bore which is slidably fitted onto a shank 119b of the hammer bit 119. The cylindrical sliding member 143 is detachably fitted in the through hole 141c of the dust collecting hood 141. The dust suction port 141a of the dust collecting hood 141 is disposed at a predetermined distance away from a bit tip 119a of the hammer bit 119 by fitting the cylindrical sliding member 143 onto the hammer bit 119 from the front. The bore inner wall surface of the cylindrical sliding member 143 is slidably engaged with the outer surface of the shank of the hammer bit 119. Thus, the dust collecting hood 141 is held on the shank 119b of the hammer bit 119, while being allowed to move in the axial direction with respect to the hammer bit 119 via the cylindrical sliding member 143. The dust collecting hood 141 having the cylindrical sliding member 143 fitted in the through hole 141c and integrally assembled therein is a feature that corresponds to the "dust collecting part". The cylindrical sliding member 143 is a feature that corresponds to the "sliding part" and the "cylindrical member".

The hose connecting part 144 has an open front end formed as a dust inlet into the internal space 141b of the dust collecting hood 141. The hose connecting part 144 extends rearward to a predetermined length along the outer contour (tapered cylindrical shape) of the chuck 108. The hose connecting part 144 has an open rear end formed as a dust outlet, and the dust collecting hose 146 is detachably inserted in and connected to the dust outlet. Further, a partition 145 is formed in a front end region of the hose connecting part 144 and serves to partition a passage of the hose connecting part 144 into several parts. The hose connecting part 144 is partitioned into passages 144a by the partition 145 such that the flow passage sectional area of each passage 144a is smaller than the minimum flow passage sectional area of the dust collecting hose 146. With this construction, a large piece of dust (chip) is blocked by the partition 145 and prevented from entering the dust collecting hose 146, so that clogging of the hose can be avoided.

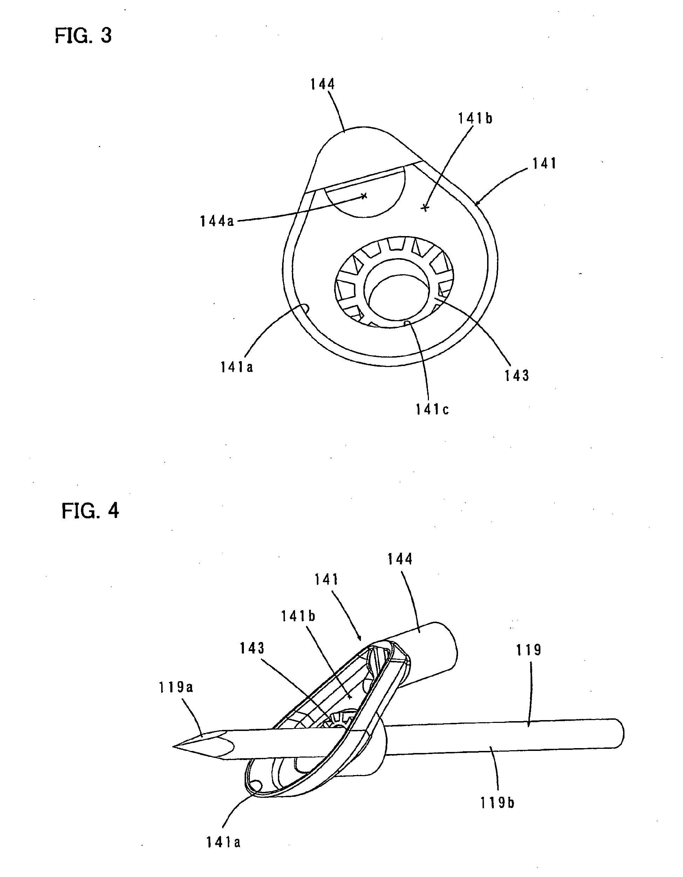

As shown in FIG. 3, the dust collecting hood 141 has a generally elliptical shape in front view (when viewed from the bit tip of the hammer bit 119). Further, as shown in FIG. 2, the front end region (the dust suction port 141a side) of the dust collecting hood 141 includes a region on a connecting part side for connection with the dust collecting hose 146 and a region on the opposite side of the hammer bit 119 from the connecting part side. The front end region of the dust collecting hood 141 is inclined such that it extends away from the bit tip 119a of the hammer bit 119 on the connecting part side, while extending toward the bit tip on the opposite side. Specifically, the front end region of the dust collecting hood 141 has a circumferential shape inclined with respect to the axial direction of the hammer bit 119 such that the region on the hose connecting part 144 side extends away from the bit tip 119a. With this configuration, visibility of the bit tip 119a (a work area of the workpiece) can be improved when it is viewed over the hose connecting part 144, and dust sucked up into the dust collecting hood 141 can be smoothly led into the hose connecting part 144.

The dust collecting hose 146 is a tubular member made of rubber or resin and having a bellows-like part 146a formed at least in part of the dust collecting hose 146. The dust collecting hose 146 is connected to the dust collecting hood 141 by inserting one (front) end of the dust collecting hose 146 into the dust outlet of the hose connecting part 144. The dust collecting hose 146 extends along the body 103 of the hammer 101 generally in the axial direction of the hammer bit 119 and is held on the barrel 107 via the side handle 110 by the hose holder 147. Further, the dust collecting hose 146 is connected to a dust collector (not shown) at least during operation. In this manner, the dust collecting device 140 of this embodiment is constructed to be held on the hammer 101 at two points in the longitudinal direction such that the dust collecting hose 146 is held on the body 103 and the dust collecting hood 141 is held on the hammer bit 119. Further, in this embodiment, the dust collecting hose 146 is connected to a dust collector formed separately from the hammer 101, but it may be connected otherwise. For example, if the hammer 101 has a suction device including a motor and a motor-driven dust collecting fan, or if the dust collecting device itself has a suction device including a motor and a motor-driven dust collecting fan, the dust collecting hose 146 may be connected to the suction device.

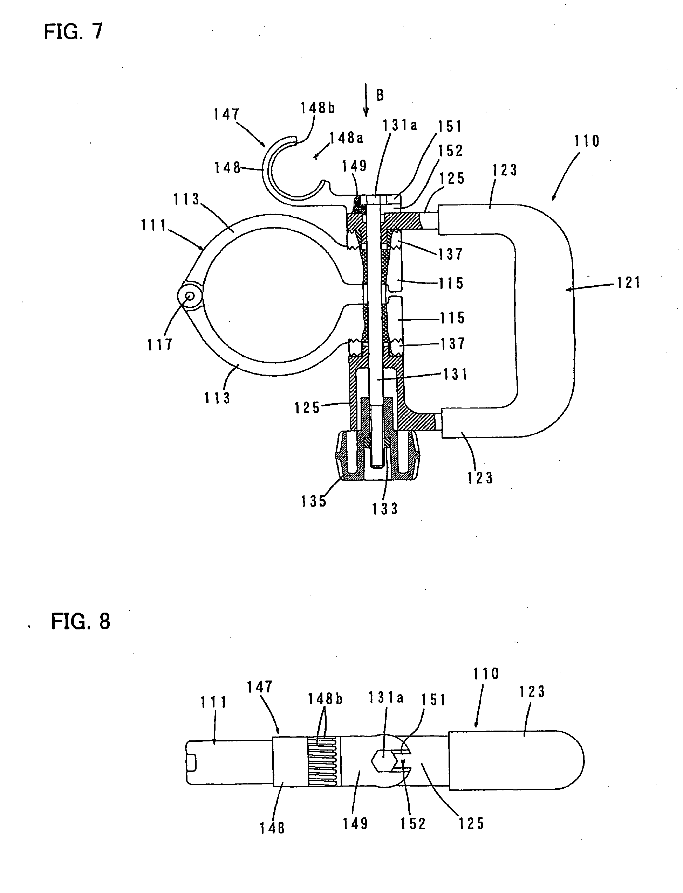

As shown in FIGS. 7 and 8, the hose holder 147 has a hose holder body 148 for holding the dust collecting hose 146 and a plate-like mounting base 149 extending from the hose holder body 148. The hose holder body 148 is a generally circular ring-like member having a hose attachment/removal opening 148a. A plurality of circumferentially extending rib-like projections 148b are formed on an inner circumferential surface of the hose holder body 148 and can engage with valleys of the bellows-like part 146a of the dust collecting hose 146. The opening width of the hose attachment/removal opening 148a in the circumferential direction is slightly smaller than the hose diameter. Therefore, in order to attach and remove the hose with respect to the hose holder body 148 via the opening 148a, the bellows-like part 146a is deformed into a generally elliptical form. The dust collecting hose 146 held by the hose holder body 148 is locked against axial movement by engagement between the projections 148b and the valleys of the bellows-like part 146a.

The mounting base 149 is inserted between a head 131 a of the through bolt 131 and the upper arm 123 of the grip 121 in the side handle 110 and fastened to the side handle 110. The mounting base 149 can be removed from the side handle 110 when the through bolt 131 is loosened. For this purpose, as shown in FIGS. 7 and 8, the mounting base 149 has a notch 151 and a recessed engagement part 152. The notch 151 is generally U-shaped in planar view and can be fitted onto the through bolt 131 from a radial direction. The recessed engagement part 152 is formed along a peripheral edge of an upper surface of the notch 151, engaged with the head 131a of the through bolt 131 fitted in the notch 151 and locked against rotation relative to the head 131a. Therefore, when the through bolt 131 is loosened, the hose holder 147 can be turned about 360 degrees around the through bolt 131, so that its position can be adjusted around the bolt axis. When the hose holder 147 is set in a predetermined position around the through bolt 131 and then the through bolt 131 is tightened by turning the fastening knob 135, the through bolt 131 which is engaged with the recessed engagement part 152 at the head 131a and locked against rotation is moved toward the fastening knob 135. In this manner, the mounting base 149 is fastened to the side handle 110 between the head 131 a of the through bolt 131 and the upper arm 123.

The dust collecting device 140 according to this embodiment is constructed as described above. When a dust collector is driven and the hammer 101 is driven to perform a chipping operation on a workpiece by linear hammering movement of the hammer bit 119, the dust collecting device 140 can collect dust generated during the operation. Specifically, dust generated by the hammer 101 is sucked up into the dust collecting hood 141 through the dust suction port 141a and collected in the dust collector via the hose connecting part 144 of the dust collecting hood 141 and the dust collecting hose 146.

According to this embodiment, the dust collecting hose 146 of the dust collecting device 140 is held by the barrel 107 of the body 103, and the dust collecting hood 141 is held by the hammer bit 119 located forward of the barrel 107. With such a construction in which the dust collecting device 140 is held on the hammer 101 at two points in the longitudinal direction, the stability of the dust collecting device 140 attached to the hammer 101 can be increased. Further, the dust collecting device 140 can be placed closer to a dust generation area, so that the dust collecting efficiency can also be improved.

In chipping operation, hammer bits 119 of different lengths are used according to the operation conditions. In consideration of this, in this embodiment, the position of the front end of the dust collecting hood 141 (the position of the dust suction port 141a) can be adjusted with respect to the hammer bit 119 by changing the position of the hose holder 147 for holding the dust collecting hose 146. Thus, the dust suction port 141a can be positioned at an adequate distance from the bit tip of the hammer bit 119 to be used. As a result, such a problem that the dust collecting efficiency is reduced by increase of the distance between the dust suction port 141a and a dust generation area can be eliminated. According to this embodiment, the hammer bits 119 having different lengths can be accommodated without reducing the dust collecting ability, and a plurality of dust collecting hoods 141 are not needed.

Further, the hammer bits 119 are available in several types varying in length and in several types varying in the diameter of the shanks 119b. In consideration of this, in this embodiment, the cylindrical sliding member 143 is detachably fitted in the through hole 141c of the dust collecting hood 141. Further, a plurality of cylindrical sliding members 143 having bores of different diameters are provided to accommodate a plurality of hammer bits 119 having the shanks 119b of different diameters. Thus, the cylindrical sliding members 143 can be replaced and mounted in the through hole 141c of the dust collecting hood 141 in order to accommodate the hammer bits 119 having the shanks 119b of different diameters.

Further, in this embodiment, the dust collecting hose 146 can be attached to and removed from the hose holder body 148 through the hose attachment/removal opening 148a, and the dust collecting hose 146 is locked against axial movement and held by engagement between the rib-like projections 148b of the hose holder body 148 and the valleys of the bellows-like part 146a of the dust collecting hose 146. With this construction, the front end position of the dust collecting hood 141 can be easily adjusted by changing the position of engagement of the bellows-like part 146a with respect to the projections 148b when attaching the dust collecting hose 146. Further, with the construction in which the dust collecting hose 146 is locked against axial movement by engagement between the rib-like projections 148a and the valleys of the bellows-like part 146a, the dust collecting hood 141 can be prevented from being displaced by vibration during chipping operation so that it can be reliably and securely held in position.

Further, in this embodiment, the sleeve-like cylindrical sliding member 143 is provided on part of the dust collecting hood 141 and slidably fitted onto the shank 119b of the hammer bit 119, and the dust collecting hood 141 is directly guided by the shank 119b of the hammer bit 119. With this construction, the dust collecting hood 141 can be held with stability without interfering with hammering movement of the hammer bit 119. Further, by provision of the cylindrical sliding member 143 which can be removably fitted in the through hole 141c of the dust collecting hood 141, when a worn part is replaced, only one of the dust collecting hood 141 and the cylindrical sliding member 143 needs to be replaced. Further, this can increase the life of the dust collecting part held on the hammer bit 119.

Further, in this embodiment, the front end region of the dust collecting hood 141 is inclined with respect to the axis of the hammer bit 119. Therefore, when a chipping operation is performed, for example, on a vertical wall, part (the dust collecting hose connection side) of the circumferential region of the dust collecting hood 141 which extends away from the bit tip 119a is set to be positioned in the line of sight, or between a user's eye and a work area of the workpiece during operation, so that visibility of the work area of the workpiece can be improved when the work area is viewed over the dust collecting hood 141. Further, part of the circumferential region of the dust collecting hood 141 which extends toward the bit tip 119a is placed below the hammer bit 119. With this construction, the dust suction port 141a can more easily catch chips which are scattered during chipping operation.

Further, in this embodiment, the dust collecting hood 141 has a generally cup-like shape and is arranged to surround the shank 119b entirely around its axis at a distance away from the bit tip 119a of the hammer bit 119. With this construction, increase of dust trapping efficiency, size reduction of the dust collecting hood 141, and improvement of visibility of the work area can be realized.

### (Second Embodiment)

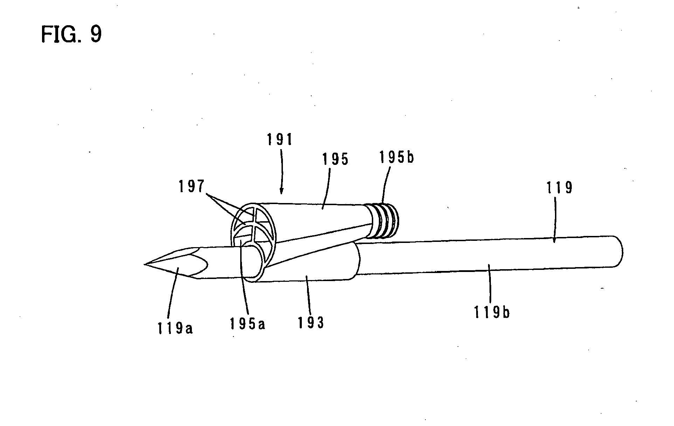

A second embodiment is now described with reference to FIG. 9. The second embodiment is a modification to the dust collecting hood of the dust collecting device 140. A dust collecting hood 191 according to this embodiment mainly includes a cylindrical part 193 which is slidably fitted onto the shank 119b of the hammer bit 119, and a cylindrical hood 195 extending adjacent to and generally parallel to the cylindrical part 193. Specifically, the dust collecting hood 191 is held on the hammer bit 119 via the generally cylindrical part 193 slidably fitted onto the shank 119b of the hammer bit 119.

The cylindrical hood 195 has a dust suction port 195a at a front end and an end 195b which is open as a dust outlet on the opposite side from the dust suction port 195a. The cylindrical hood 195 has a generally trumpet-like form tapered rearward to the end 195b. Thus, the suction area of the dust suction port 195a is increased. The cylindrical hood 195 is arranged parallel to the cylindrical part 193 and surrounds the hammer bit 119 partially around its axis. Dust is sucked up from the dust suction port 195a into the internal space of the cylindrical hood 195 during operation. The dust collecting hose 146 (not shown in FIG. 9) is connected to the end 195b of the cylindrical hood 195. As explained in the first embodiment, the dust collecting hose 146 is held on the barrel 107 via the side handle 110 by the hose holder 147. The dust collecting hood 191, the cylindrical part 193 and the internal space are features that correspond to the "dust collecting port", the "sliding part" and the "dust passage", respectively.

In this embodiment, the cylindrical hood 195 surrounds the hammer bit 119 partially around its axis, and the dust collecting device is constructed to be held at two points in the longitudinal direction such that the dust collecting hose 146 is held on the barrel 107 and the dust collecting hood 191 is held on the hammer bit 119. Therefore, like in the above-described first embodiment, the stability of the dust collecting device 140 attached to the hammer 101 can be increased. Further, the dust collecting hood 191 can be placed closer to a dust generation area, so that the dust collecting efficiency can also be improved.

Further, a partition 197 is formed at least in the dust suction port 195a of the cylindrical hood 195 and partitions the dust suction port 195a into several parts. The sectional area of each flow passage of the dust suction port 195a partitioned by the partition 197 is smaller than the minimum flow passage sectional area of the dust collecting hose 146. With this construction, a large piece of dust (chip) is blocked by the partition 197 and prevented from entering and clogging the internal space of the cylindrical hood 195 and the dust collecting hose 146.

Further, according to this embodiment, with the construction in which the dust collecting hood 191 is formed by the cylindrical part 193 which is slidably held on the hammer bit 119, and the cylindrical hood 195 which extends parallel to the cylindrical part 193 and surrounds the hammer bit 119 partially around its axis, size reduction of the dust collecting hood 191 and improvement of visibility of the work area can be realized.

In the above-described embodiments, the electric hammer in which the hammer bit 119 performs only hammering movement in the axial direction is explained as a representative example of the impact, but the present leadings can also be applied to a hammer drill which can switch between hammering mode in which the hammer bit 119 performs hammering movement and hammer drill mode in which it performs hammering movement in the axial direction and hammer drill movement in the circumferential direction.

### Description of Numerals

- 101: electric hammer (impact tool)
- 103: body
- 105: housing
- 107: barrel
- 108: chuck
- 109: handgrip (main handle)
- 110: side handle
- 111: mounting ring
- 113: ring component
- 115: base
- 117: shaft
- 119: hammer bit (tool bit)
- 121: grip
- 123: arm
- 125: extending end portion
- 131: through bolt
- 131a: head
- 133: nut
- 135: fastening knob
- 137: cam
- 140: dust collecting device
- 141: dust collecting hood (dust collecting part)
- 141 a: dust suction port
- 141b: internal space
- 141: c through hole
- 143: cylindrical sliding member (dust collecting part)
- 144: hose connecting part
- 144a: passage
- 145: partition
- 146: dust collecting hose (dust transfer part)
- 146a: bellows-like part
- 147: hose holder (hose holding part)
- 148: hose holder body
- 148a: hose attachment/removal opening
- 148b: projection
- 149: mounting base
- 151: notch
- 152: recessed engagement part
- 191: dust collecting hood (dust collecting part)
- 193: cylindrical part (sliding part)
- 195: cylindrical hood
- 195a: dust suction port
- 195b: end
- 197: partition

## Claims

1. A dust collecting device (140) that is adapted to be attached to an impact tool (101) and is adapted to collect dust generated by the impact tool (101) in which a tool bit (119) detachably coupled to a front end region of a tool body (103) is caused to rectilinearly move in an axial direction of the tool bit (119), comprising:
a dust collecting part (141; 191) having a dust suction port (141a; 195a) at its front end, and
a dust transfer part (146) which is connected to the dust collecting part (141; 191) in order to transfer dust downstream from the dust suction port (141a; 195a), wherein:
the dust collecting part (141; 191) is held by a shank (119b) of the tool bit (119), and the dust transfer part (146) is held by the tool body (103),
a hose holder (147) comprising a holder body (148), wherein
the dust transfer part (146) comprises a tubular member made of rubber or resin and having a bellows-like part (146a) formed at least in part of the dust transfer part (146), **characterized in that**
the dust transfer part (146) is held by the hose holder (147) by engagement between rib-like projections (148b) of the hose holder body (148) and valleys of the bellows-like part (146a) of the dust transfer part (146).

2. The dust collecting device (140) as defined in claim 1, wherein the dust collecting part (141; 191) has a sliding part which is engaged at least in part with the shank of the tool bit (119) and can move in the axial direction with respect to the shank.

3. The dust collecting device (140) as defined in claim 2, wherein the dust collecting part (141; 191) has a dust suction port part formed with the dust suction port (141a), and the dust suction port part and the sliding part can be attached to and detached from each other.

4. The dust collecting device (140) as defined in claim 3, wherein the dust suction port part has a through hole through which the tool bit (119) extends, and the sliding part is detachably engaged in the through hole.

5. The dust collecting device (140) as defined in any one of claims 1 to 4, wherein the dust collecting part (141; 191) has a dust passage (144a) via which the dust suction port (141a) communicates with the dust transfer part (146) and the dust passage surrounds the tool bit (119) entirely around its axis.

6. The dust collecting device (140) as defined in any one of claims 1 to 4, wherein the dust collecting part (141; 191) has a dust passage (144a) via which the dust suction port (141a) communicates with the dust transfer part (146) and the dust passage (144a) surrounds the tool bit (119) partially around its axis.

7. The dust collecting device (140) as defined in any one of claims 1 to 6, wherein the dust collecting part (141; 191) can be adjusted in position in the axial direction of the tool bit (119).

8. The dust collecting device (140) as defined in claim 7, wherein the dust collecting part (141; 191) has a through hole extending therethrough in the axial direction of the tool bit (119), and a plurality of cylindrical members which have bores of different diameters corresponding to different outer diameters of a plurality of tool bits (119) and are detachably fitted in the through hole, and wherein one of the cylindrical members which has the bore of a diameter corresponding to an outer diameter of the shank of the tool bit (119) to be coupled to the tool body is mounted in the through hole.

9. An impact tool having the dust collecting device (140) as defined in any one of claims 1 to 8.

## Patentansprüche

1. Staubsammelvorrichtung (140), die dazu angepasst ist, an ein Schlagwerkzeug (101) angebracht zu werden, und angepasst ist, Staub zu sammeln, der durch das Schlagwerkzeug (101), in welchem ein Werkzeugbit (119), das lösbar an einem vorderen Endbereich eines Werkzeugkörpers (103) gekoppelt ist, dazu bewirkt wird, sich in einer axialen Richtung des Werkzeugbits (119) hin- und hergehend zu bewegen, erzeugt wird, mit
einem Staubsammelteil (141; 191), der eine Staubansaugöffnung (141a; 195a) an seinem vorderen Ende aufweist, und
einem Staubübertragungsteil (146), der mit dem Staubsammelteil (141; 191) verbunden ist, um Staub stromabwärts von der Staubansaugöffnung (141a; 195a) zu übertragen, wobei
der Staubsammelteil (141; 191) durch einen Schaft (119b) des Werkzeugbits (119) gehalten wird, und der Staubübertragungsteil (146) durch den Werkzeugkörper (103) gehalten wird,
einem Schlauchhalter (147), der einen Halterkörper (148) aufweist, wobei
der Staubübertragungsteil (146) ein rohrförmiges Bauteil aufweist, das aus Kautschuk oder Kunstharz hergestellt ist und einen faltenbalgähnlichen Teil (146a) aufweist, der zumindest teilweise in dem Staubübertragungsteil (146) ausgebildet ist,
**dadurch gekennzeichnet, dass**
der Staubübertragungsteil (146) durch den Schlauchhalter (147) durch Eingriff zwischen rippenähnlichen Vorsprüngen (148b) des Schlauchhalterkörpers (148) und Tälern des faltenbalgähnlichen Teils (146a) des Staubübertragungsteils (146) gehalten wird.

2. Staubsammelvorrichtung (140) nach Anspruch 1, bei der der Staubsammelteil (141; 191) einen Gleitteil aufweist, der zumindest teilweise mit dem Schaft des Werkzeugbits (119) in Eingriff steht und sich in der axialen Richtung in Bezug auf den Schaft bewegen kann.

3. Staubsammelvorrichtung (140) nach Anspruch 2, bei der der Staubsammelteil (141; 191) einen Staubansaugöffnungsteil aufweist, der mit der Staubansaugöffnung (141a) ausgebildet ist und der Staubansaugöffnungsteil und der Gleitteil miteinander verbunden und voneinander gelöst werden können.

4. Staubsammelvorrichtung (140) nach Anspruch 3, bei der der Staubansaugöffnungsteil ein Durchgangsloch aufweist, durch welches sich das Werkzeugbit (119) erstreckt, und der Gleitteil lösbar in dem Durchgangsloch in Eingriff steht.

5. Staubsammelvorrichtung (140) nach einem der Ansprüche 1 bis 4, bei der der Staubsammelteil (141; 191) eine Staubpassage (144a) aufweist, über welche die Staubansaugöffnung (141a) mit dem Staubübertragungsteil (146) in Verbindung steht, und die Staubpassage das Werkzeugbit (119) gesamt um dessen Achse herum umgibt.

6. Staubsammelvorrichtung (140) nach einem der Ansprüche 1 bis 4, bei der der Staubsammelteil (141; 191) eine Staubpassage (144a) aufweist, über welche die Staubsammelöffnung (141a) mit dem Staubübertragungsteil (146) in Verbindung steht, und die Staubpassage das Werkzeugbit teilweise um dessen Achse herum umgibt.

7. Staubsammelvorrichtung (140) nach einem der Ansprüche 1 bis 6, bei der der Staubsammelteil (141; 191) in Position in der axialen Richtung des Werkzeugbits (119) justiert werden kann.

8. Staubsammelvorrichtung (140) nach Anspruch 7, bei der der Staubsammelteil (141; 191) ein Durchgangsloch, das sich dort hindurch in der axialen Richtung des Werkzeugbits (119) erstreckt, und eine Mehrzahl von zylindrischen Bauteilen aufweist, die Bohrungen von unterschiedlichen Durchmessern entsprechend zu unterschiedlichen äußeren Durchmessern einer Mehrzahl von Werkzeugbits (119) aufweist, und lösbar in das Durchgangsloch gepasst sind, und bei der eines von den zylindrischen Bauteilen, das die Bohrung eines Durchmessers entsprechend einem äußeren Durchmesser des Schaftes des Werkzeugbits (119) aufweist, das mit dem Werkzeugkörper gekoppelt wird, in dem Durchgangsloch montiert ist.

9. Schlagwerkzeug, das die Staubsammelvorrichtung (140) nach einem der Ansprüche 1 bis 8 aufweist.

## Revendications

1. Dépoussiéreur (140) qui est conçu pour être fixé à un outil de percussion (101) et est conçu pour collecter la poussière produite par l'outil de percussion (101) dans lequel une mèche (119) d'outil accouplée de manière amovible à une région d'extrémité avant d'un corps (103) d'outil est amenée à se déplacer de façon rectiligne dans une direction axiale de la mèche (119) d'outil, comprenant :
une partie de collecte de poussière (141 ; 191) possédant un orifice d'aspiration de poussière (141a ; 195a) au niveau de son extrémité avant, et
une partie de transfert de poussière (146) qui est raccordée à la partie de collecte de poussière (141 ; 191) afin de transférer la poussière vers le bas depuis l'orifice d'aspiration de poussière (141a ; 195a), dans lequel :
la partie de collecte de poussière (141 ; 191) est maintenue par une tige (119b) de la mèche (119) d'outil, et la partie de transfert de poussière (146) est maintenue par le corps (103) d'outil,
un support (147) de tuyau comprenant un corps (148) de support, dans lequel
la partie de transfert de poussière (146) comprend un élément tubulaire composé de caoutchouc ou de résine et comportant une partie en forme de soufflet (146a) formée au moins en partie dans la partie de transfert de poussière (146), **caractérisé en ce que** la partie de transfert de poussière (146) est maintenue par le support (147) de tuyau grâce à l'entrée en prise entre des saillies de type nervures (148b) du corps (148) de support de tuyau et des creux de la partie en forme de soufflet (146a) de la partie de transfert de poussière (146).

2. Dépoussiéreur (140) selon la revendication 1, dans lequel la partie de collecte de poussière (141 ; 191) possède un élément coulissant qui entre au moins partiellement en prise avec la tige de la mèche (119) d'outil et peut se déplacer dans la direction axiale par rapport à la tige.

3. Dépoussiéreur (140) selon la revendication 2, dans lequel la partie de collecte de poussière (141 ; 191) possède une partie pour l'orifice d'aspiration de poussière formée avec l'orifice d'aspiration de poussière (141a), et la partie pour l'orifice d'aspiration de poussière et l'élément coulissant peuvent être fixés l'un à l'autre et séparés l'un de l'autre.

4. Dépoussiéreur (140) selon la revendication 3, dans lequel la partie pour l'orifice d'aspiration de poussière possède un trou traversant dans lequel s'étend la mèche (119) d'outil, et l'élément coulissant entre en prise amovible dans le trou traversant.

5. Dépoussiéreur (140) selon l'une quelconque des revendications 1 à 4, dans lequel la partie de collecte de poussière (141 ; 191) possède un passage pour poussière (144a) par le biais duquel l'orifice d'aspiration de poussière (141a) communique avec la partie de transfert de poussière (146) et le passage pour poussière entoure la mèche (119) d'outil totalement autour de son axe.

6. Dépoussiéreur (140) selon l'une quelconque des revendications 1 à 4, dans lequel la partie de collecte de poussière (141 ; 191) possède un passage pour poussière (144a) par le biais duquel l'orifice d'aspiration de poussière (141a) communique avec la partie de transfert de poussière (146) et le passage pour poussière (144a) entoure la mèche (119) d'outil partiellement autour de son axe.

7. Dépoussiéreur (140) selon l'une quelconque des revendications 1 à 6, dans lequel la partie de collecte de poussière (141 ; 191) peut être réglée en position dans la direction axiale de la mèche (119) d'outil.

8. Dépoussiéreur (140) selon la revendication 7, dans lequel la partie de collecte de poussière (141 ; 191) possède un trou traversant s'étendant dans celle-ci dans la direction axiale de la mèche (119) d'outil et une pluralité d'éléments cylindriques qui comportent des trous de différents diamètres correspondant à différents diamètres extérieurs d'une pluralité de mèches (119) d'outil et sont installés de manière amovible dans le trou traversant, et dans lequel l'un des éléments cylindriques dont le trou a un diamètre correspondant à un diamètre extérieur de la tige de la mèche (119) d'outil à accoupler au corps d'outil est monté dans le trou traversant.

9. Outil de percussion possédant le dépoussiéreur (140) selon l'une quelconque des revendications 1 à 8.
